# EUROPÄISCHE PATENTSCHRIFT

(11) **EP 3 158 050 B1**
(45) Veröffentlichungstag und Bekanntmachung des Hinweises auf die Patenterteilung: **26.08.2020**
(21) Anmeldenummer: 15741720.5
(22) Anmeldetag: 11.06.2015
(51) Int. Cl.: C11D 17/00, C11D 17/04, C11D 3/12

(54) **VOLLWASCHMITTELTUCH MIT REGULIERTER PHASENAUSTRITTSDIFFUSION DER WASCHAKTIVEN SUBSTANZEN**
HEAVY-DUTY DETERGENT SHEET WITH A REGULATED PHASE EMISSION DIFFUSION OF THE DETERGENT SUBSTANCES
LINGETTE DE LESSIVE À DIFFUSION EN PHASES RÉGULÉES DES SUBSTANCES LAVANTES ACTIVES

(30) Priorität: 17.06.2014 DE 102014008585
(43) Veröffentlichungstag der Anmeldung: 26.04.2017
(73) Patentinhaber: Coin Consulting GmbH, 58706 Menden (DE)
(72) Erfinder: MAUSBERG, Marcus, 58708 Menden (DE); PULINA, Michael, 47807 Krefeld (DE)
(74) Vertreter: Gruber, Daniel
(86) Internationale Anmeldenummer: PCT/DE2015/000279
(87) Internationale Veröffentlichungsnummer: WO 2015/192821

(56) Entgegenhaltungen:
- DE-A1-102010 060 126
- US-A1- 2002 155 772
- US-A1- 2003 207 630

## Beschreibung

### Gebiet der Erfindung

Die vorliegende Erfindung betrifft Vollwaschmitteltücher zur Reinigung von Textilien und insbesondere Vollwaschmitteltücher, bei denen die Phasenaustrittsdiffusion der waschaktiven Substanzen reguliert ist, sowie ein Verfahren zu deren Herstellung.

### Hintergrund der Erfindung und Stand der Technik

Seit Anbeginn der Menschheit besteht das Streben nach Hygiene. Schließlich stellt die Hygiene im Alltag der Menschen eine gewichtige Komponente dar. Der Hygienegedanke des Menschen besteht in erster Linie in der Erhaltung der Gesundheit. Mit der weiteren Entwicklung der Möglichkeiten gerieten neben den grundreinigenden Reinigungseffekten der Duft sowie die Verbesserung der Reinigungsleistungen durch die verwendeten Rohstoffmischungen in den Fokus. Die Optimierung der Reinigungsleistung kennzeichnet sich insbesondere durch die Möglichkeit der Verlängerung eines hygienisch reinen Zustandes sowie einer Verbesserung eines Reinigungsgrades.

Heutzutage kann die Hygiene in die Bereiche der Körper-, Oberflächen- und Textilhygiene unterteilt werden. Letztere wird differenziert in die Anwendung nach Material und Farbe des Textils. Spätestens in den 90'er Jahren des 20ten Jahrhunderts ist auch ökologische Reinigung in das Bewusstsein der Konsumenten getreten. Dabei ist es wünschenswert, einerseits die bereits erreichten Vorzüge eines Waschmittels zu erhalten und andererseits weitere innovative und ökologisch sinnvolle Produktlösungen zu erfinden.

Mit Beginn industriellen Produktion von Waschmitteln wurden diese als Pulver realisiert. Ein Waschmittelpulver stellt noch heute eine Mischung aus unterschiedlichen waschaktiven Substanzen dar.

Mit dem Fortschritt bei der Entwicklung von Waschmitteln fanden Enzyme und weitere neue tensidische Verbindungen ihren Einzug in dieses Marktsegment. Neben den zur Reinigung erforderlichen Substanzen werden heutzutage große Mengen an Füllstoff hinzugegeben. Dies führt dazu, dass eine Änderung im Dosierungsverhalten des Verbrauchers nicht erforderlich wurde. Erste Versuche, auf die Füllstoffe zu verzichten, führten zu einer Überdosierung der Tenside bedingt durch die gewohnte Anwendung seitens der Konsumenten.

Es folgte die Einführung der Flüssigwaschmittel, die rückstandsfreier zu dosieren sind und eine physikalische Alternative zu der Feststoffmischung des Waschmittels darstellen. Allerdings konnten die Flüssigwaschmittel in ihren reinigenden Eigenschaften bis heute nicht das Reinigungsniveau eines Vollwaschmittels (also einer Feststoffmischung) erreichen. Dies findet seine Begründung in der Limitierung eines Flüssigwaschmittels auf flüssige oder gut in Wasser lösliche Komponenten. Die entscheidende dabei fehlende Substanz in einem Flüssigwaschmittel stellt die Gruppe der Zeolithe dar. Diese unterstützen die Schmutzadsorption, sowie die Glanzbildung/Farbechtheit bei der Anwendung.

Einen weiteren wichtigen Faktor für die optimale Reinigung unter Einsatz einer handelsüblichen Waschmachine stellt die rechtzeitige Dosierung der waschaktiven Substanzen innerhalb des Waschprozesses dar. Mit üblichen Waschmitteln (Pulverwaschmittel und Flüssigwaschmittel) wird dies über das Waschprogramm realisiert. Die Dosierkammern ermöglichen eine zeitliche Differenzierung in der Hinzugabe von Weichspüler und Waschmittel des Vor- und Hauptwaschgangs.

Ein derzeitiger Produkttrend liegt in der Art und Weise der Portionierung des Waschmittels. Dies kann zum einen geschehen durch die Verpackung eines Flüssigwaschmittels in kleinen Polymerbeuteln. Hier werden sämtliche waschaktiven Substanzen zum Zeitpunkt der Auflösung des Polymerbeutels freigesetzt.

Eine andere physikalische Modifikation des Waschmittels besteht im Abmischen eines Waschmittels mit einem Fettalkohol, sodass gewünschte Formen erzielt werden können. Hier erfolgt die Freisetzung der waschaktiven Substanzen über die Auflösung der Struktur der Waschmittel-/Fettalkoholabmischung.

Wie bereits in der DE 10 2010 060 126 A1 beschrieben, kann auch ein Mehrphasenprodukt beschrieben werden. Das dort offenbarte Waschmitteltuch zeichnet sich durch die Kombination eines Trägersubstrats mit einer flüssigen Tränklösung (Zweiphasenprodukt) aus. Aufgrund des bevorzugten Einsatzes von hydrophilen Trägersubstraten und Tränklösungen liegt hier ein Auswaschprozess vor, der mit der - oben bereits im Zusammenhang mit in kleinen Polymerbeuteln verpackten Flüssigwaschmitteln erwähnten - Auflösung der Polymerbeutel vergleichbar ist. Lediglich die Aktivierung konnte zu einem früheren Zeitpunkt festgestellt werden.

Die DE 10 2013 014 015 offenbart ein weiter optimiertes Produkt, bei dem eine Dispersion auf ein bei Raumtemperatur festes Trägersubstrat appliziert wurde. Durch den erstmaligen Einsatz einer Dispersion konnte eine Reinigungsleistung mit den Merkmalen eines Waschmittelpulvers (z.B. Zeolithe, Schichtsilikate, etc.) realisiert werden. Hier wurden primär hydrophobe Trägersubstrate eingesetzt, da auch die Waschmitteldispersion auf Grund des höheren Anteils der waschaktiven Substanzen im Verhältnis zu dem Zweiphasensystem eine hydrophobe Eigenschaft aufweist. Dadurch konnte eine Aktivierung der waschaktiven Substanzen (Phasenaustrittsdiffusion) über einen längeren Zeitraum beobachtet werden.

Die US 2003/207630 A1 offenbart ein Waschmittelprodukt, bei dem zunächst auf ein Trägermaterial aus Polyester eine Waschmittellösung aufgebracht wird, woraufhin das Produkt getrocknet wird, um ein trockenes Endprodukt zu erhalten.

Die obige Zusammenschau des Standes der Technik zeigt, dass in der Evolution der Fertigdosierwaschmittel zum einen die physikalischen Applikationsformen (Polymerbeutel, Waschmittelpappe, Waschmitteltücher) und zum anderen die physikalische Zusammensetzung der Tränkungslösungen (Lösungen, Dispersionen) modifiziert wurden.

Bei allen oben genannten Produkten bzw. Verfahren bleibt jedoch die zeitliche Steuerung der Freisetzung der waschaktiven Substanzen unberücksichtigt. Mit Blick auf ein Waschmitteltuch bedeutet dies zunächst, dass die Diffusion der waschaktiven Substanzen in das Waschwasser nicht wesentlich variiert werden kann.

Die Aufgabe dieser Erfindung liegt somit in der Realisierung eines Vollwaschmitteltuchs, bei dem die Diffusion der waschaktiven Substanzen in das Waschwasser gesteuert werden kann.

### Zusammenfassung der Erfindung

Es ist ein Ziel der vorliegenden Erfindung, ein Vollwaschmitteltuch vorzusehen, bei dem die zeitliche Diffusion der waschaktiven Substanzen (Phasenaustrittsdiffusion) gesteuert werden kann.

Dieses Ziel ist erreicht worden durch ein Verfahren zum Herstellen eines Vollwaschmitteltuchs nach Anspruch 1.

Diese Ziel ist auch erreicht worden durch ein Vollwaschmitteltuch nach Anspruch 4. Vorteilhafte Ausgestaltungen des erfindungsgemäßen Vollwaschmitteltuchs und seines Herstellungsverfahrens ergeben sich aus den Unteransprüchen. Hydrophilierten hydrophobe Substrate sind nicht Teil der Erfindung.

### Beschreibung der bevorzugten Ausführungsformen

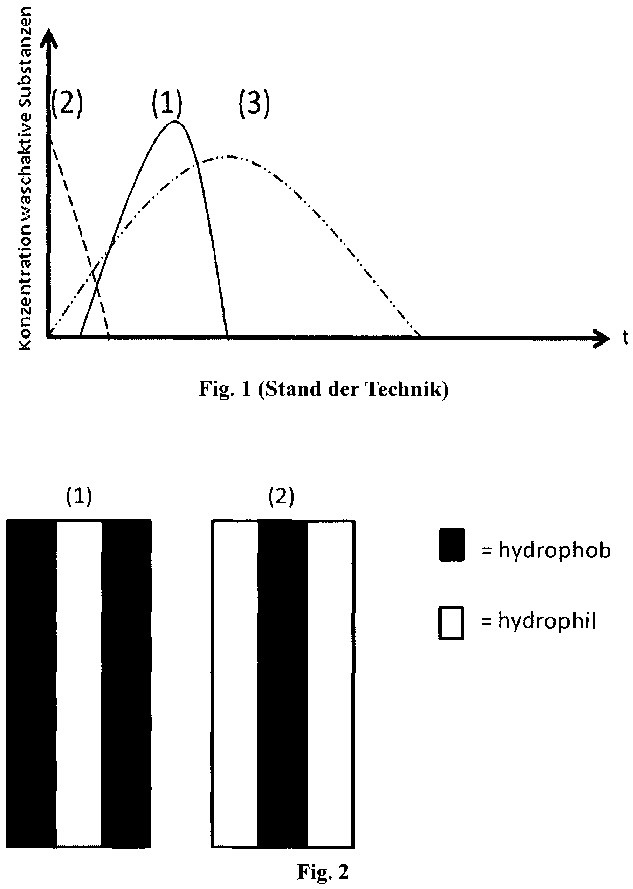

Die - nicht regulierbare - zeitliche Freisetzung der waschaktiven Substanzen von Fertigdosierwaschmitteln nach dem Stand der Technik ist in Fig. 1 gezeigt: (1) ist die Kurve für in kleinen Polymerbeuteln abgefüllte Flüssigwaschmittel, (2) ist die Kurve für mit Fettalkoholen abgemischte Waschmittel und (3) ist die Kurve für das Waschmitteltuch nach der DE 10 2010 060 126 A1. Erstaunlicherweise konnte das erfindungsgemässe Vollwaschmitteltuch mit regulierter Phasenaustrittsdiffusion der waschaktiven Subsanzen durch die hydrophobe Beschichtung hydrophiler Substrate bzw. durch die hydrophile Beschichtung hydrophober Substrate erreicht werden, wobei dann auf das so erhaltene bei Raumtemperatur feste mehrschichtige Trägersubstrat eine Waschmitteldispersion, wie in der DE 10 2013 014 015 offenbart, aufgebracht wurde. Die hydrophobe bzw. hydrophile Beschichtung kann dabei durch Tränkung, durch Besprühen oder durch ein- oder zweiseitiges Coating an den Oberflächen des zu beschichtenden Substrats erfolgen, und zwar auf beiden Seiten des zu beschichtenden Substrats (in Fig. 2 bezeichnet (1) die beidseitige hydrophobe Beschichtung eines hydrophilen Substrats und (2) die beidseitige hydrophile Beschichtung eines hydrophoben Substrats - hydrophob = schwarz/hydrophil = weiß) oder auch nur auf einer Seite. Als hydrophile Substrate eignen sich insbesondere:
- Cellulose
- Viskose
- weitere Cellulosederivate

Im Bereich der hydrophoben Substrate eignen sich insbesondere:
- Polyethylen
- Polypropylen
- Polyester

Für die Hydrophobierung (hydrophobe Beschichtung) der hydrophilen Substrate eignen sich insbesondere:
- Polymere
- langkettige Fettalkohole
- Wachse (Bienenwachs)
- Öle
- Sheabutter

Die Hydrophilierung (hydrophile Beschichtung) der hydrophoben Substrate konnte insbesondere erreicht werden durch den Einsatz von:
- Polaren Wachsen
- Polaren Ölen
- Mehrwertige Fettalkohole
- Sulfonierte Verbindungen
- Sulfatierte Verbindungen
- Alkoxylierte Verbindungen
- Amidierte Verbindungen
- Gluconisierte Verbindungen
- weitere Verbindungen mit funktionellen hydrophilen Kopfmolekülen

Durch die über die Hydrophilierung bzw. Hydrophobierung erreichte Oberflächenaktivierung des auf diese Weise erhaltenen Trägersubstrats konnten im Rahmen des Herstellungsprozesses des Waschmitteltuchs erstmals duale Aktivitätszonen realisiert werden, die über die Anlagerung der Waschmitteldispersion im Trägersubstrat entscheiden. Unter Verwendung eines hydrophilen Substrats mit einer hydrophoben Beschichtung kann eine Primäranlagerung der Waschmitteldispersion in den äußeren Zonen des Trägersubstrats realisiert werden. Dadurch wird die Phasenaustrittsdiffusion beschleunigt. Dieser Aufbau eignet sich insbesondere für die Verwendung von z.B. Kurzwaschprogrammen. Das inverse System (hydrophilierte hydrophobe Substrate) zeigt hingegen eine Primäranlagerung im Zentrum des Trägersubstrats, wodurch die Phasenaustrittsdiffusion gezielt verlangsamt werden konnte. Die Intensität der Oberflächenbehandlung (Schichtdicke der behandelten äußeren Oberfläche) und/oder die Variation der Polaritäten der Additive zur Oberflächenaktivierung (d.h. der für die Hydrophobierung bzw. Hydrophilierung verwendeten Substanzen) ermöglicht es, den zeitlichen Ablauf der Phasenaustrittsdiffusion eines Waschmitteltuchs erstmals gezielt zu steuern.

Der Einsatz dieser Erfindung ist möglich über alle Kategorien von Waschmitteln. Es wurden z.B. folgende Waschmitteldispersionen in ihrem Aufbau eingesetzt:

**Vollwaschmitteltuch (universal):**

| |
|---|
| Anionische Tenside |
| Nichtionische Tenside |
| Phosphonate/Komplexbildner |
| C10-C18 Fettsäuresalze |
| Optische Aufheller |
| Enzyme |
| Builder (Polycarboxylate, Zeolithe, Schichtsilikate) |
| Stabilisatoren (Propylenglykol, Glycerin, Borax, Inulin) |
| Duftstoffe |
| Konservierungsmittel |
| Soil-Release Polymer |
| pH-Regulatoren |

**Farbwaschmitteltuch (Color):**

| |
|---|
| Anionische Tenside |
| Nichtionische Tenside |
| Phosphonate/Komplexbildner |
| C10-C18 Fettsäuresalze |
| Farbstoffe |
| Farbübertragungsschutz |
| Hydrotrope (Natriumcumolsulfonat) |
| Enzyme |
| Builder (Polycarboxylate, Zeolithe, Schichtsilikate) |
| Stabilisatoren (Propylenglykol, Glycerin, Borax, Inulin) |
| Duftstoffe |
| Konservierungsmittel |
| Soil-Release Polymer |
| pH-Regulatoren |

**Schwarzwaschmitteltuch (black):**

| |
|---|
| Anionische Tenside |
| Nichtionische Tenside |
| Phosphonate/Komplexbildner |
| C10-C18 Fettsäuresalze |
| Farbstoffe |
| Farbübertragungsschutz |
| Enzyme |
| Builder (Polycarboxylate, Zeolithe, Schichtsilikate) |
| Stabilisatoren (Propylenglykol, Glycerin, Borax, Inulin) |
| Trübungsmittel |
| Duftstoffe |
| Konservierungsmittel |
| pH-Regulatoren |

**Weißwaschmitteltuch (white):**

| |
|---|
| Anionische Tenside |
| Nichtionische Tenside |
| C10-C18 Fettsäuresalze |
| Optische Aufheller |
| Soil-Release-Polymer |
| Farbübertragungsschutz |
| Enzyme |
| Builder (Polycarboxylate, Zeolithe, Schichtsilikate) |
| Stabilisatoren (Propylenglykol, Glycerin, Borax, Inulin) |
| Farbstoffe |
| Trübungsmittel |
| Duftstoffe |
| Konservierungsmittel |
| pH-Regulatoren |

**Feinwaschmitteltuch:**

| |
|---|
| Anionische Tenside |
| Nichtionische Tenside |
| C10-C18 Fettsäuresalze |
| Phosphonate/Komplexbildner |
| Farbübertragungsschutz |
| Enzyme |
| Builder (Polycarboxylate, Zeolithe, Schichtsilikate) |
| Stabilisatoren (Propylenglykol, Glycerin, Borax, Inulin) |
| Duftstoffe |
| Entschäumer |
| Konservierungsmittel |
| pH-Regulatoren |

**Wollwaschmitteltuch:**

| |
|---|
| Anionische Tenside |
| Nichtionische Tenside |
| amphotere Tenside |
| C10-C18 Fettsäuresalze |
| Phosphonate/Komplexbildner |
| Farbübertragungsschutz |
| Builder (Polycarboxylate, Zeolithe, Schichtsilikate) |
| Duftstoffe |
| Konservierungsmittel |
| Trübungsmittel |
| Conditioner |
| pH-Regulatoren |

Für die Wollwaschmitteltücher und die Feinwaschmitteltücher erwies sich der Einsatz von hydrophobierten hydrophilen Substraten als geeignet, da hier kürze Waschprogramme mit niedrigerer Temperatur verwendet werden. In den Fällen der Anwendungen von Waschmitteltüchern für weiße, schwarze, bunte und universelle Wäsche war der Einsatz von hydrophilierten hydrophoben Substraten erfolgreich, da hier die Phasenaustrittsdiffusion reduziert werden konnte.

Das in Wasser unlösliche funktionelle Additiv der Vollwaschmitteltuch-Dispersion kann ein Zeolith und/oder Schichtsilikat umfassen. Das Flüssigwaschmittel der Dispersion kann über eine Viskosität von größer 500 mPas verfügen. Die Dispersion ist statistisch auf dem Trägersubstrat fixiert. Weiterhin können alle bekannten Komponenten eines Vollwaschmittels enthalten sein.

## Patentansprüche

1. Verfahren zur Herstellung eines Vollwaschmitteltuchs, **gekennzeichnet durch** die folgenden Schritte:
(a) hydrophobes Beschichten eines hydrophilen Substrats, um ein mehrschichtiges bei Raumtemperatur festes Trägersubstrat zu erhalten,
(b) Aufbringen einer aus einem Flüssigwaschmittel und einem in Wasser unlöslichen funktionellen Additiv, das ein Zeolith und/oder Schichtsilikat umfasst, bestehenden Dispersion auf das Trägersubstrat.

2. Verfahren nach Anspruch 1, **dadurch gekennzeichnet, dass** das hydrophobe Beschichten des hydrophilen Substrats nur auf einer Seite erfolgt.

3. Verfahren nach Anspruch 1, **dadurch gekennzeichnet, dass** das hydrophobe Beschichten des hydrophilen Substrats auf beiden Seiten erfolgt.

4. Vollwaschmitteltuch, umfassend ein bei Raumtemperatur festes Trägersubstrat sowie eine auf das Trägersubstrat aufgebrachte und aus einem Flüssigwaschmittel und einem in Wasser unlöslichen funktionellen Additiv, das ein Zeolith und/oder Schichtsilikat umfasst, bestehende Dispersion, **dadurch gekennzeichnet, dass** das Trägersubstrat aus einem hydrophilen und mit einer hydrophoben Beschichtung versehenen Substrat besteht.

5. Vollwaschmitteltuch nach Anspruch 4, **dadurch gekennzeichnet, dass** die hydrophobe Beschichtung des hydrophilen Substrats nur auf einer Seite vorhanden ist.

6. Vollwaschmitteltuch nach Anspruch 4, **dadurch gekennzeichnet, dass** die hydrophobe Beschichtung des hydrophilen Substrats auf beiden Seiten vorhanden ist.

7. Vollwaschmitteltuch nach einem der Ansprüche 4 - 6, **dadurch gekennzeichnet, dass** das Flüssigwaschmittel der Dispersion über eine Viskosität von größer 500 mPas verfügt.

8. Vollwaschmitteltuch nach einem der Ansprüche 4 - 7, **dadurch gekennzeichnet, dass** die Dispersion statistisch auf dem Trägersubstrat fixiert ist.

9. Vollwaschmitteltuch nach einem der Ansprüche 4 - 8, **dadurch gekennzeichnet, dass** alle bekannten Komponenten eines Vollwaschmittels enthalten sind.

10. Vollwaschmitteltuch nach einem der Ansprüche 4 - 9, **dadurch gekennzeichnet, dass** das zu beschichtende Substrat hydrophil ist und aus Cellulose, Viskose oder weiteren Cellulosederivaten besteht.

11. Vollwaschmitteltuch nach Anspruch 10, **dadurch gekennzeichnet, dass** die Hydrophobierung mit Polymeren, langkettigen Fettalkoholen, Wachsen, Ölen oder Sheabutter erfolgt.

## Claims

1. Method for manufacturing a heavy-duty laundry detergent wipe **characterized by** the following steps:
(a) hydrophobic coating of a hydrophilic substrate to obtain a multilayered carrier substrate which is solid at ambient temperature,
(b) applying a dispersion comprising a liquid washing detergent and a water insoluble functional additive comprising a zeolite and/or a phyllosilicate to the substrate.

2. Method according to claim 1, **characterized in that** the hydrophobic coating of the hydrophilic substrate is carried out on one side only.

3. Method according to claim 1, **characterized in that** the hydrophobic coating of the hydrophilic substrate is carried out on both sides.

4. Heavy-duty laundry detergent wipe, comprising a substrate which is solid at ambient temperature and a dispersion applied to the substrate said dispersion comprising a liquid washing detergent and a water insoluble functional additive comprising a zeolite and/or a phyllosilicate, **characterized in that** the carrier substrate comprises a hydrophilic substrate provided with a hydrophobic coating.

5. Heavy-duty laundry detergent wipe according to claim 4, **characterized in that** the hydrophobic coating of the hydrophilic substrate is provided on one side only.

6. Heavy-duty laundry detergent wipe according to claim 4, **characterized in that** the hydrophobic coating of the hydrophilic substrate is provided on both sides.

7. Heavy-duty laundry detergent wipe according to one of claims 4-6, **characterized in that** the liquid washing detergent of the dispersion has a viscosity greater than 500 mPas.

8. Heavy-duty laundry detergent wipe according to one of claims 4-7, **characterized in that** the dispersion is statistically fixed to the carrier substrate.

9. Heavy-duty laundry detergent wipe according to one of claims 4-8, **characterized in that** it comprises all known components of a heavy-duty laundry detergent.

10. Heavy-duty laundry detergent wipe according to one of claims 4-9, **characterized in that** the substrate to be coated is hydrophilic and consists of cellulose, viscose, or further cellulose derivates.

11. Heavy-duty laundry detergent wipe according to claim 10, **characterized in that** the hydrophobic coating is carried out by using polymeres, long-chain fatty alcohols, waxes, oils, or shea butter.

## Revendications

1. Procédé de fabrication d'une lingette de lessive tous textiles, **caractérisé par** les étapes suivantes :
(a) le revêtement hydrophobe d'un substrat hydrophile afin d'obtenir un substrat de support en plusieurs couches résistant à la température ambiante,
(b) le dépôt d'une dispersion à base d'un détergent liquide et d'un additif fonctionnel insoluble dans l'eau qui comprend une zéolithe et/ou un phyllosilicate, sur le substrat de support.

2. Procédé selon la revendication 1, **caractérisé en ce que** le revêtement hydrophobe du substrat hydrophile n'a lieu que sur un côté.

3. Procédé selon la revendication 1, **caractérisé en ce que** le revêtement hydrophobe du substrat hydrophile a lieu sur les deux côtés.

4. Lingette de lessive tous textiles comprenant un substrat de support résistant à la température ambiante ainsi qu'une dispersion déposée sur le substrat de support et constituée d'un détergent liquide et d'un additif fonctionnel insoluble dans l'eau qui comprend une zéolithe et/ou un phyllosilicate, **caractérisée en ce que** le substrat de support est constitué d'un substrat hydrophile et muni d'un revêtement hydrophobe.

5. Lingette de lessive tous textiles selon la revendication 4, **caractérisée en ce que** le revêtement hydrophobe du substrat hydrophile n'est présent que sur un côté.

6. Lingette de lessive tous textiles selon la revendication 4, **caractérisée en ce que** le revêtement hydrophobe du substrat hydrophile est présent sur les deux côtés.

7. Lingette de lessive tous textiles selon l'une des revendications 4 à 6, **caractérisée en ce que** le détergent liquide de la dispersion possède une viscosité supérieure à 500 mPa.

8. Lingette de lessive tous textiles selon l'une des revendications 4 à 7, **caractérisée en ce que** la dispersion est fixée de manière statistique sur le substrat de support.

9. Lingette de lessive tous textiles selon l'une des revendications 4 à 8, **caractérisée en ce que** tous les composants connus d'une lessive tous textiles sont compris.

10. Lingette de lessive tous textiles selon l'une des revendications 4 à 9, **caractérisée en ce que** le substrat à revêtir est hydrophile et est constitué de cellulose, de viscose ou d'autres dérivés cellulosiques.

11. Lingette de lessive tous textiles selon la revendication 10, **caractérisée en ce que** l'hydrophobisation a lieu avec des polymères, des alcools gras à longues chaînes, des cires, des huiles ou du beurre de karité.
